# EUROPEAN PATENT SPECIFICATION

(11) **EP 3 112 792 B1**
(45) Date of publication and mention of the grant of the patent: **27.03.2019**
(21) Application number: 16177641.4
(22) Date of filing: 01.07.2016
(51) Int. Cl.: F28F 21/08, B23K 1/00, B23K 35/22, C22C 21/00, F28F 1/12

(54) **HEAT EXCHANGER AND AIR CONDITIONER INCLUDING THE SAME**
WÄRMETAUSCHER UND KLIMAANLAGE DAMIT
ÉCHANGEUR DE CHALEUR ET CLIMATISEUR COMPRENANT CELUI-CI

(30) Priority: 03.07.2015 KR 20150095430; 24.05.2016 KR 20160063219
(43) Date of publication of application: 04.01.2017
(73) Proprietor: Samsung Electronics Co., Ltd., Gyeonggi-do 16677 (KR)
(72) Inventor: PARK, Sung Tae, Gyeonggi-do (KR); JU, Won, Gyeonggi-do (KR); LIM, Jung Soo, Gyeonggi-do (KR); JEONG, Jae Hyo, Gyeonggi-do (KR); KIM, Jong Moon, Gyeonggi-do (KR); SEO, Hyeong Joon, Gyeonggi-do (KR)
(74) Representative: Walaski, Jan Filip

(56) References cited:
- EP-A1- 2 543 951
- EP-A2- 1 484 571
- WO-A1-2004/040038
- JP-A- S60 105 897

## Description

The present disclosure relates to a heat exchanger and an air conditioner including the same, and more particularly, to a heat exchanger of an aluminum alloy material designed to have an electric potential difference between a fin and a tube, and an air conditioner including the same. EP 2 543 951 A1 discloses a heat exchanger having the features in the preamble of claim 1.

Generally, a heat exchanger is a device that exchanges heat between a refrigerant and outside air, and is provided with a tube in which the refrigerant flows to exchange heat with outside air, a heat exchanger fin in contact with the tube to widen a heat radiation area, and a header through which opposite ends of the tube are communicated. A heat exchanger includes an evaporator or condenser, and may form a refrigerating cycle device along with a compressor that compresses a refrigerant and an expansion valve that expands the refrigerant.

Recently, aluminum, which is light and has an excellent thermal conductivity, is being used as a material for a tube and a heat exchanger fin of a heat exchanger, and research into alloy materials has been actively conducted to secure corrosion resistance properties of aluminum. In addition, research has been conducted on things such as organic/inorganic coatings, a design with sacrificial corrosion of zinc, a design with sacrificial corrosion of a fin, or the like to secure corrosion resistance properties of aluminum.

To address the above-discussed deficiencies, it is a primary objective to provide a heat exchanger provided to prevent corrosion of a tube material by being designed to have higher electric potentials in the sequential order of a tube, a filler, and a heat exchanger fin, and an air conditioner including the same.

In addition, it is another aspect of the present disclosure to provide a heat exchanger in which a tube material is formed of an aluminum alloy material including a rare-earth metal, and an air conditioner including the same.

EP 2 543 951 discloses a heat exchanger constituted of aluminium alloy.

JP S60 105897 discloses the use of rare earth elements in a heat exchanger for strength and corrosion resistance.

According to an aspect of the invention, there is provided a heat exchanger according to claim 1.

In accordance with one aspect of the present disclosure, a heat exchanger includes a tube through which a refrigerant flows, a heat exchanger fin coupled to a surface of the tube, and a filler that couples the tube and the heat exchanger fin, wherein the tube is formed of an aluminum alloy material including a rare-earth metal, and the heat exchanger fin and the filler are formed of aluminum alloy materials including silicon (Si), copper (Cu), and zinc (Zn).

In addition, the aluminum alloy material of the tube may further include at least one selected from a group that includes silicon (Si), iron (Fe), copper (Cu), manganese (Mn) and zirconium (Zr).

In addition, the aluminum alloy material of the tube may include 0.05 to 0.2 parts by weight of the rare-earth metal with respect to an overall weight of aluminum, and may further include at least one from 0.05 to 0.1 parts by weight of silicon (Si), 0.05 to 0.2 parts by weight of iron (Fe), 0.05 to 0.3 parts by weight of copper (Cu), 0.05 to 0.3 parts by weight of manganese (Mn), and 0.01 to 0.05 parts by weight of zirconium with respect to the overall weight of aluminum.

In addition, the rare-earth metal may include at least one selected from a rare-earth metal group that includes yttrium (Y), lanthanum (La), cerium (Ce), neodymium (Nd), scandium (Sc), and ytterbium (Yb).

In addition, the heat exchanger fin may include braze-welded one to the tube.

In addition, electric potentials of the tube, the filler, and the heat exchanger fin may be formed to sequentially decrease.

In addition, the heat exchanger fin may include a core layer and a clad layer formed on at least one surface of the core layer, and the filler may include the one melted from the clad layer when braze-welding the heat exchanger fin and the tube.

In addition, the filler may include having a higher electric potential than the core layer of the heat exchanger fin.

In addition, the tube and the core layer of the heat exchanger fin may include forming a corrosion potential within the range of 50 to 80 mV.

In addition, a core layer of the heat exchanger fin may be formed of an aluminum alloy material that includes 0.1 to 0.6 parts by weight of silicon (Si), 0.05 to 0.2 parts by weight of copper (Cu), and 2.3 to 2.7 parts by weight of zinc (Zn) with respect to an overall weight of aluminum.

In addition, the filler may be formed of an aluminum alloy material that includes 6.8 to 8.2 parts by weight of silicon (Si), 0.1 to 0.25 parts by weight of copper (Cu), and 0.1 to 0.2 parts by weight of zinc (Zn) with respect to an overall weight of aluminum.

In addition, at least one of the heat exchanger fin and the filler may be formed of an aluminum alloy material that further includes at least one selected from a group that includes iron (Fe), manganese (Mn), chrome (Cr), zirconium (Zr), and titanium (Ti).

In addition, a core layer of the heat exchanger fin may be formed of an aluminum alloy material that further includes at least one selected from a group that includes 0.1 to 0.3 parts by weight of iron (Fe), 1.0 to 1.5 parts by weight of manganese (Mn), 0.01 to 0.1 parts by weight of chrome (Cr), 0.01 to 0.1 parts by weight of zirconium (Zr), and 0.01 to 0.1 parts by weight of titanium (Ti) with respect to an overall weight of aluminum. In addition, the filler may be formed of an aluminum alloy material that further includes at least one selected from a group that includes 0.6 to 0.8 parts by weight of iron (Fe), 0.05 to 0.1 parts by weight of manganese (Mn), 0.01 to 0.1 parts by weight of chrome (Cr), 0.01 to 0.1 parts by weight of zirconium (Zr), and 0.01 to 0.1 parts by weight of titanium (Ti) with respect to an overall weight of aluminum.

In accordance with another aspect of the present disclosure, a heat exchanger includes a tube through which a refrigerant flows, a heat exchanger fin coupled to a surface of the tube, and a filler provided between the tube and the heat exchanger fin, wherein electric potentials of the tube, the filler, and the heat exchanger fin are formed to sequentially decrease.

In addition, the tube and a core layer of the heat exchanger fin may have an electric potential difference within a range of 50 to 80 mV.
In addition, the tube may be formed of an aluminum alloy material that includes a rare-earth metal.

In addition, the aluminum alloy material of the tube may further include at least one selected from a group that includes silicon (Si), iron (Fe), copper (Cu), manganese (Mn), and zirconium (Zr).

In addition, the aluminum alloy material of the tube may include 0.05 to 0.2 parts by weight of the rare-earth metal with respect to an overall weight of aluminum and may further include at least one from 0.05 to 0.1 parts by weight of silicon (Si), 0.05 to 0.2 parts by weight of iron (Fe), 0.05 to 0.3 parts by weight of copper (Cu), 0.05 to 0.3 parts by weight of manganese (Mn), and 0.01 to 0.05 parts by weight of zirconium (Zr) with respect to the overall weight of aluminum.

In addition, the rare-earth metal may include at least one selected from a group that includes yttrium (Y), lanthanum (La), cerium (Ce), neodymium (Nd), scandium (Sc), and ytterbium (Yb).

In addition, the heat exchanger fin and the filler may be formed of aluminum alloy materials that include silicon (Si), copper (Cu), and zinc (Zn).

In addition, a core layer of the heat exchanger fin may be formed of an aluminum alloy material that includes 0.1 to 0.6 parts by weight of silicon (Si), 0.05 to 0.2 parts by weight of copper (Cu), and 2.3 to 2.7 parts by weight of zinc (Zn) with respect to an overall weight of aluminum.

In addition, the filler may be formed of an aluminum alloy material that includes 6.8 to 8.2 parts by weight of silicon (Si), 0.1 to 0.25 parts by weight of copper (Cu), and 0.1 to 0.2 parts by weight of zinc (Zn) with respect to an overall weight of aluminum.

In addition, at least one of the heat exchanger fin and the filler may be formed of an aluminum alloy material that further includes at least one selected from a group that includes iron (Fe), manganese (Mn), chrome (Cr), zirconium (Zr), and titanium (Ti).

In addition, a core layer of the heat exchanger fin may be formed of an aluminum alloy material that further includes at least one selected from a group that includes 0.1 to 0.3 parts by weight of iron (Fe), 1.0 to 1.5 parts by weight of manganese (Mn), 0.01 to 0.1 parts by weight of chrome (Cr), 0.01 to 0.1 parts by weight of zirconium (Zr), and 0.01 to 0.1 parts by weight of titanium (Ti) with respect to an overall weight of aluminum.

In addition, the filler may be formed of an aluminum alloy material that further includes at least one selected from 0.6 to 0.8 parts by weight of iron (Fe), 0.05 to 0.1 parts by weight of manganese (Mn), 0.01 to 0.1 parts by weight of chrome (Cr), 0.01 to 0.1 parts by weight of zirconium (Zr), and 0.01 to 0.1 parts by weight of titanium (Ti) with respect to an overall weight of aluminum.

In accordance with still another aspect of the present disclosure, an air conditioner includes a heat exchanger having a tube through which a refrigerant flows, a heat exchanger fin coupled to a surface of the tube, and a filler that couples the tube and the heat exchanger fin, wherein the tube is formed of an aluminum alloy material that includes a rare-earth metal, and the heat exchanger and the filler are formed of an aluminum alloy material that includes silicon (Si), copper (Cu), and zinc (Zn).

In addition, the aluminum alloy material of the tube may further include at least one selected from a group that includes silicon (Si), iron (Fe), copper (Cu), manganese (Mn), and zirconium (Zr).

In addition, the rare-earth metal may include at least one selected from a group that includes yttrium (Y), lanthanum (La), cerium (Ce), neodymium (Nd), scandium (Sc), and ytterbium (Yb).

In addition, electric potentials of the tube, the filler, and the heat exchanger fin may be formed to sequentially decrease.

In addition, the heat exchanger fin may include a core layer and a clad layer provided on at least one surface of the core layer, and the filler may have a higher electric potential than the core layer of the heat exchanger fin.

In addition, the tube and a core layer of the heat exchanger fin may be formed to have a corrosion potential within a range of 50 to 80 mV.

In addition, at least one of the heat exchanger fin and the filler may be formed of an aluminum alloy material that further includes at least one selected from a group that includes iron (Fe), manganese (Mn), chrome (Cr), zirconium (Zr), and titanium (Ti).

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

For a more complete understanding of the present disclosure and its advantages, reference is now made to the following description taken in conjunction with the accompanying drawings, in which like reference numerals represent like parts: These and/or other aspects of the disclosure will become apparent and more readily appreciated from the following description of the embodiments, taken in conjunction with the accompanying drawings in which:
FIG. 1 illustrates an exterior of an air conditioner according to various embodiments of the present disclosure;
FIG. 2 illustrates a configuration related to a flow of a refrigerant in the air conditioner according to various embodiments of the present disclosure;
FIG. 3 illustrates an external appearance of a heat exchanger according to various embodiments of the present disclosure;
FIG. 4 illustrates an exploded perspective view of the heat exchanger according to various embodiments of the present disclosure;
FIG. 5 illustrates an enlarged view of region A in FIG. 4 according to various embodiments of the present disclosure;
FIG. 6 illustrates an example of a coupling of a heat exchanger fin and a tube in the heat exchanger according to various embodiments of the present disclosure;
FIG. 7 illustrates a process of braze-welding heat exchanger fins to a plurality of tubes various embodiments of the present disclosure;
FIGS. 8 and 9 illustrates Galvanic corrosion according to various embodiments of the present disclosure;
FIG. 10 illustrates a design example of an electric potential difference of the heat exchanger according to various embodiments of the present disclosure; and
FIG. 11 illustrates a corrosion process of the heat exchanger according to various embodiments of the present disclosure.

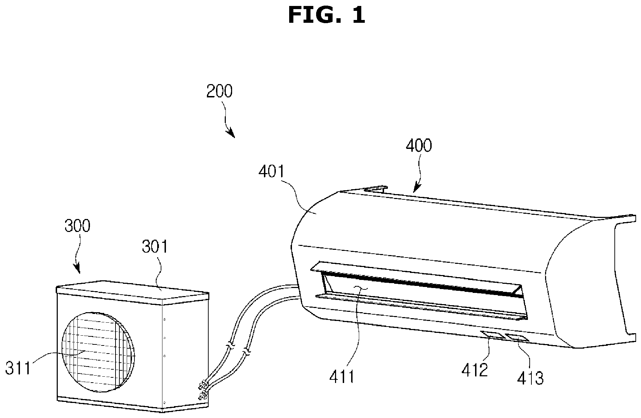

FIGURES 1 through 11, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device.

Hereinafter, embodiments of a heat exchanger will be described in detail with reference to the accompanying drawings.

Generally, a heat exchanger is a device that exchanges heat between a refrigerant and outside air, and is provided with a tube in which the refrigerant flows to exchange heat with outside air, a heat exchanger fin in contact with the tube to widen a heat radiation area, and a header through which opposite ends of the tube are communicated.

Such a heat exchanger may be applicable in various forms within a range of heat transferring between fluids of high temperature and low temperature. For example, the heat exchanger may be applied to various fields such as waste heat recovery, cooling a fluid of a high temperature side, heating a fluid of a low temperature side, condensing vapor, evaporating the fluid of the low temperature side, and the like.

Such a heat exchanger may be applied to various types of devices including an air conditioner, a refrigerator, etc. Hereinafter, an application of the heat exchanger will be described by taking an air conditioner as an example before describing the heat exchanger.

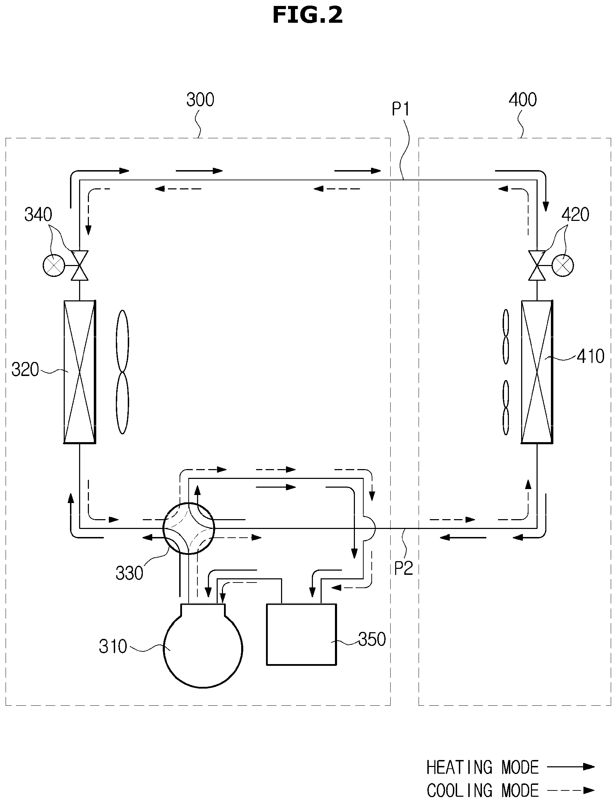

FIG. 1 is a view illustrating an external appearance of an air conditioner according to one embodiment, and FIG. 2 is a view illustrating a configuration related to a flow of a refrigerant in the air conditioner according to one embodiment.

Referring to FIG. 1, an air conditioner 200 according to one embodiment includes an outdoor unit 300 provided outdoors to perform heat exchange between outdoor air and a refrigerant, and an indoor unit 400 provided indoors to perform heat exchange between indoor air and the refrigerant.

The outdoor unit 300 includes an outdoor unit main body 301 that forms an exterior of the outdoor unit 300 and an outdoor unit vent outlet 311 provided at one side of the outdoor unit main body 301 which discharges heat-exchanged air.

The indoor unit 400 may include an indoor unit main body 401 that forms an exterior of the indoor unit 400, an indoor unit vent outlet 411 provided at a front side of the indoor unit main body 401 to discharge heat-exchanged air, an input unit 412 that receives operating commands for the air conditioner 200 from a user, and a display unit 413 that displays operating information of the air conditioner 200.

Referring to FIG. 2, the air conditioner 200 according to one embodiment includes a gas pipe Pi, which provides a flow channel through which a gaseous refrigerant flows, and a liquid pipe P2, which provides a flow channel through which a liquid refrigerant flows, that connect the outdoor unit 300 and the indoor unit 400 in addition to the outdoor unit 300 and the indoor unit 400, and the gas pipe P1 and the liquid pipe P2 that extend into the outdoor unit 300 and the indoor unit 400.

The outdoor unit 300 includes a compressor 310 which compresses a refrigerant, an outdoor heat exchanger 320 that performs heat exchange between outdoor air and the refrigerant, a four-way valve 330 that selectively guides the refrigerant compressed in the compressor 310 to any one of the outdoor heat exchanger 320 and the indoor unit 400 on the basis of a heating mode or a cooling mode, an outdoor expansion valve 340 that decompresses the refrigerant guided to the outdoor heat exchanger 320 in the case of the heating mode, and an accumulator 350 that prevents a liquid refrigerant that failed to be evaporated from flowing into the compressor 310.

The compressor 310 may compress a gaseous refrigerant at a low pressure to a gaseous refrigerant at a high pressure using a rotatory power of a compressor motor (not shown) rotated by electric energy received from an external power source.

The four-way valve 330 guides the refrigerant compressed in the compressor 310 to the outdoor heat exchanger 320 for cooling, and guides the refrigerant compressed in the compressor 310 to the indoor unit 400 for heating.

The outdoor heat exchanger 320 condenses the refrigerant compressed in the compressor 310 for cooling, and evaporates the refrigerant decompressed in the indoor unit 400 for heating. Herein, a heat exchanger 1 according to the disclosure may be applied as the above-described outdoor heat exchanger 320. In other words, the heat exchanger 1 may include a tube 10 in which a refrigerant flows and a heat exchanger fin 30 coupled to a surface of the tube, and the tube 10 and the heat exchanger fin 30 may be coupled by a filler 36. Hereinafter, duplicated descriptions that have been described will be omitted.

The outdoor expansion valve 340 may decompress the refrigerant in the heating mode as well as regulate the quantity of the refrigerant supplied to the outdoor heat exchanger 320 so that a sufficient heat exchange is performed in the outdoor heat exchanger 320. Specifically, the outdoor expansion valve 340 may decompress the refrigerant using a throttling action of a refrigerant in which a pressure of the refrigerant decreases without heat exchange when the refrigerant passes through a narrow flow channel.

The indoor unit 400 includes an indoor heat exchanger 410 that performs heat exchange between a refrigerant and indoor air, and an indoor expansion valve 420 that decompresses the refrigerant supplied to the indoor heat exchanger 410 when cooling.

The indoor heat exchanger 410 may evaporate a liquid refrigerant at a low pressure for cooling and condense a gaseous refrigerant at a high pressure for heating. The heat exchanger 1 according to the disclosure herein may be applied as the above-described indoor heat exchanger 410, and duplicated descriptions that have been described will be omitted for convenience of description.

The indoor expansion valve 420 may decompress the refrigerant using the throttling action as well as regulate the quantity of the refrigerant supplied to the indoor heat exchanger 410 so that a sufficient heat exchange is performed in the indoor heat exchanger 410.

An example in which the heat exchanger 1 according to one embodiment is applied to the air conditioner 200 has been described as above.

Next, the heat exchanger 1 according to the disclosure herein will be described in more detail.

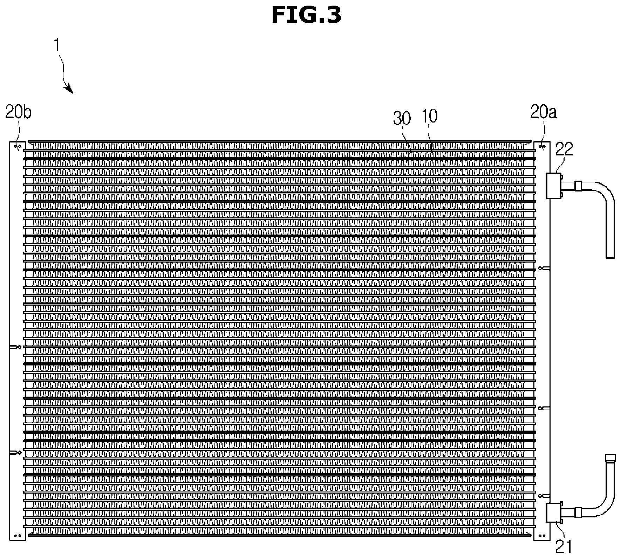

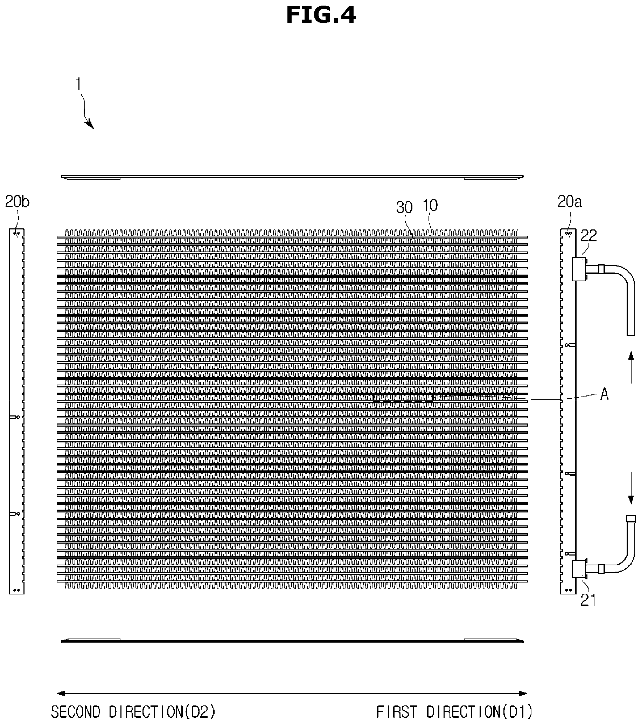

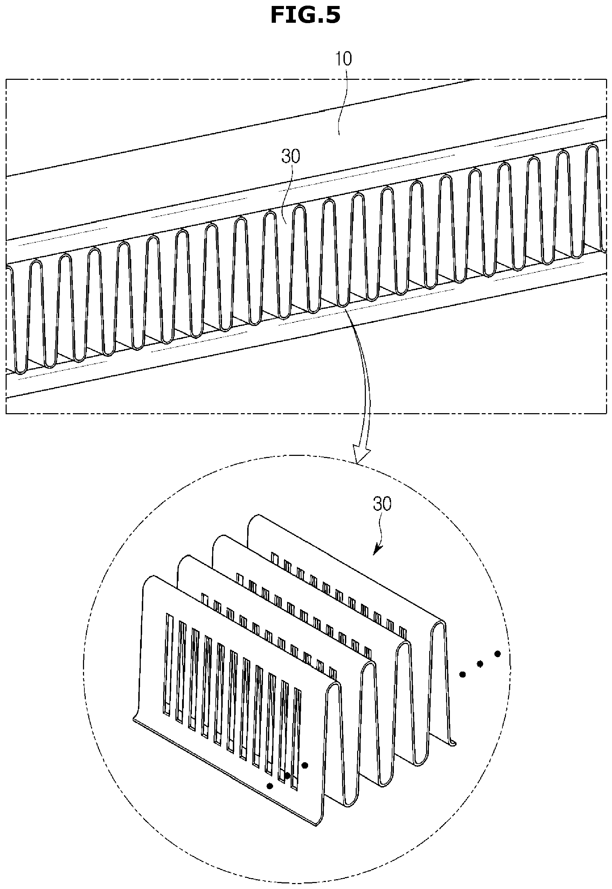

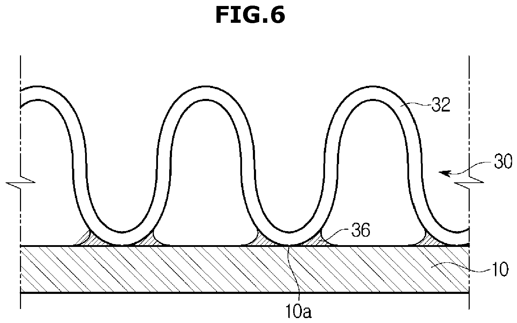

FIG. 3 is a view illustrating an external appearance of the heat exchanger according to one embodiment, FIG. 4 is an exploded perspective view of the heat exchanger according to one embodiment, FIG. 5 is an enlarged view of region A in FIG. 4, and FIG. 6 is a view illustrating an example of a coupling of a heat exchanger fin and a tube in the heat exchanger according to one embodiment.

Referring to FIGS. 3 to 6, the heat exchanger 1 according to one embodiment may include a plurality of tubes 10, headers 20a and 20b, and a plurality of heat exchanger fins 30.

The plurality of tubes 10 may be disposed in parallel to each other, and a channel may be formed inside the tubes for a refrigerant serving as a fluid to flow therethrough. In addition, the plurality of tubes 10 may be coupled to form a tube assembly.

The refrigerant may exchange heat with outside air while phase-changing (compressing) from a gaseous state to a liquid state, or exchange heat with outside air while phase-changing (expanding) from the liquid state to the gaseous state. The heat exchanger 1 may be used as a condenser when the refrigerant phase-changes from the gaseous state to the liquid state, and the heat exchanger 1 may be used as an evaporator when the refrigerant phase-changes from the liquid state to the gaseous state.

The plurality of tubes 10 may be formed by extrusion molding or injection molding, and a case in which the plurality of tubes 10 are injection molded will be taken as an example hereinafter for convenience of description. In some embodiments, connecting members may be coupled to opposite ends of the plurality of tubes 10. Connecting members may be coupled to opposite ends of the plurality of tubes 10 to form a tube array. The connecting members may be components separated from the plurality of tubes 10 or may be integrally injection-molded with the plurality of tubes 10 in some embodiments.

The headers 20a and 20b may include a first header 20a and a second header 20b that are coupled to outer sides of the connecting members. The first header 20a towards a first direction and the second header 20b towards a second direction may be coupled with outer sides of the tubes 10. The first header 20a and the second header 20b may be separately disposed at a regular distance, and the plurality of tubes 10 may be disposed between the first header 20a and the second header 20b.

One ends of the plurality of tubes 10 toward a first direction D1 may be connected to the first header 20a, and the other ends of the plurality of tubes 10 toward a second direction D2 may be connected to the second header 20b. However, an arrangement structure of the headers 20a and 20b and the plurality of tubes 10 may not be limited to the above-described example.

The first header 20a may include an inflow header 21 and an outflow header 22, wherein an inlet through which the refrigerant flows into the plurality of tubes 10 may be formed at the inflow header 21 and an outlet through which refrigerant flows from the plurality of tubes may be formed at the outflow header 22.

In some embodiments, the inflow header 21 may be provided at the second header 20b and the outflow header 22 may be provided at the second header 20b as a matter of course so that the inflow header and the outflow header are toward different directions from each other.

The heat exchanger fins 30 may be interposed between the plurality of tubes 10 so that the refrigerant flowing through the channels formed in the tubes 10 efficiently exchanges heat with outside air. That is, the heat exchanger fins 30 may be disposed to be in contact with the tubes 10 in a heat exchanging space.

The parts at which the plurality of heat exchanger fins 30 come into contact with the plurality of tubes 10 may be fixed by braze-welding. Braze-welding is a method that welds by melting a filler metal at a high temperature, here, a filler metal, which has a lower melting point than that of a material to be welded, may be used.

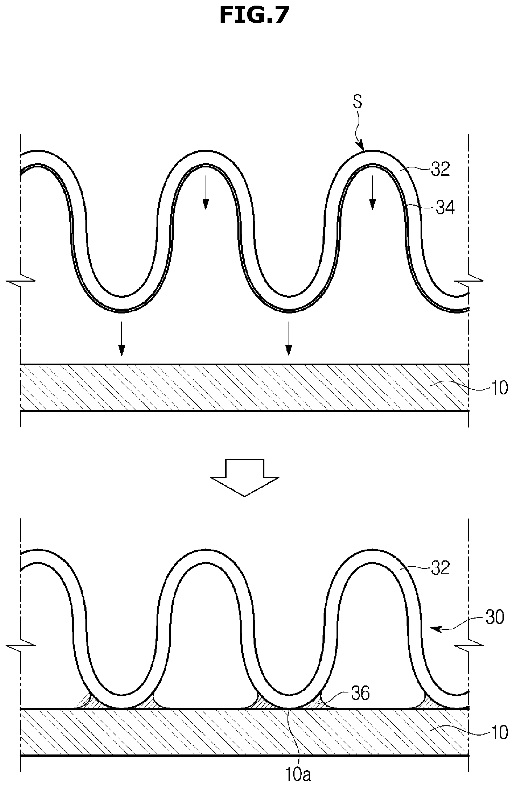

Hereinafter, a coupling form between the tubes 10 and the heat exchanger fins 30 will be described in detail with reference to FIG. 7. FIG. 7 is a view illustrating a process of braze-welding the heat exchanger fins 30 to the plurality of tubes 10.

Referring to FIG. 7, the heat exchanger fins 30 may be provided in a shape that is bent a plurality of times. More specifically, the heat exchanger fins 30 may each include a first slope upwardly slanted in a first direction and a second slope that extends from the first slope and is downwardly slanted in the first direction. Here, the first direction is defined as a direction in which the heat exchanger fins 30 extend along contact portions of the tubes 10 and the heat exchanger fins 30. The heat exchanger fins 30 may be provided in a zigzag shape in which the plurality of first slopes and second slopes are coupled. In some embodiments, the heat exchanger fins 30 may be formed in various shapes to increase a surface in contact with outside air, and may be installed so that parts at which the first slopes and the second slopes are connected and bent come into contact with inner sides of contact portions 10a on the tubes 10 to bring about the heat exchange.

A fin material of the heat exchanger fins 30 may be a brazing sheet type fin material that may be brazed at a high temperature. Such a brazing sheet S may include a core layer 32 and a clad layer 34 formed at one or both surfaces of the core layer 32.

In the case in which the clad layer 34 is formed at one side of the core layer 32, braze-welding may be performed in a state in which a clad surface of the clad layer 34 and the tube 10 face each other when braze-welding the heat exchanger fins 30 with the tubes 10. In some embodiments, it is preferable to form the clad layer 34 at both sides of the core layer 32 when interposing the heat exchanger fins 30 between the plurality of tubes 10.

High temperature heat may be applied to the clad layer 34 in the process of braze-welding through which the clad layer 34 is melted to fix the contact portion 10a of the heat exchanger fin 30 and the tube 10. Hereinafter, the coupling portion formed between the core layer 32 of the heat exchanger fin 30 and the tube 10 by the melting of the clad layer 34 of the heat exchanger fin 30 is defined as the filler 36.

The filler 36 is formed by the melting of the clad layer 34 of the heat exchanger fin 30, thus a composition may be the same as that of the clad layer 34. In other words, an aluminum alloy material formed by the melting of the clad layer 34 becomes the filler metal and may form the filler. However, in some embodiments, electric potential values of the clad layer 34 and the filler 36 may show a fine difference due to the heat applied during the melting process, and other physical properties may differ as a matter of course.

The heat exchanger 1 according to the disclosure is directed to forming a high electrode potential of the tube 10 to improve corrosion resistance of the tube by optimizing a composition of alloy elements added to a tube material and the fin material of the heat exchanger 1. In other words, the heat exchanger fin 30 formed to have a low electrode potential may induce a sacrificial corrosion of the heat exchanger fin 30, which may lead to protection of the tube material as the result.

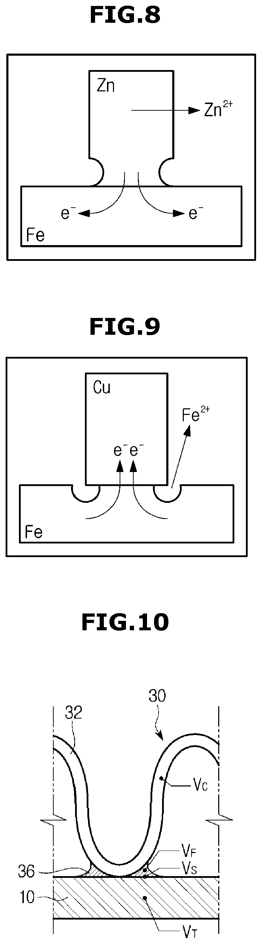

The sacrificial corrosion of the heat exchanger fin 30 as described above is referred to as Galvanic corrosion or Bimetallic corrosion, and hereinafter, to better understand Galvanic corrosion, it will be described in detail with reference to FIGS. 8 and 9. Galvanic corrosion occurs when two dissimilar metals are in contact with one another and one metal promotes oxidation of the other metal, and corrosion may occur due to a difference in intrinsic electric potentials of the dissimilar metals. Specifically, an electric corrosion cell is formed when two dissimilar metals electrically connected to each other are in contact with an electrolyte solution, and corrosion is promoted at one metal serving as an anode due to a lower electric potential and the other metal serving as a cathode due to a higher electric potential is protected.

Referring to FIG. 8, when zinc (Zn) and iron (Fe) are in contact with one another, the zinc (Zn) that has a relatively lower electric potential, becomes an anode and corrosion thereof may be promoted, and the iron (Fe), which has a relatively higher electric potential, becomes a cathode and corrosion thereof may be prevented. Specifically, electrons e- migrate from the zinc (Zn) to the iron (Fe), and ionized zinc Zn2+ is dissolved in the electrolyte solution. That is, the zinc (Zn) is corroded before the iron (Fe), and consequently the corrosion of the iron (Fe) may be delayed due to cathodic protection.

Referring to FIG. 9, when copper Cu and iron Fe are in contact with one another, the iron (Fe), which has a relatively lower electric potential, becomes an anode and corrosion thereof may be promoted, and the copper (Cu), which has a relatively higher electric potential, becomes a cathode and corrosion thereof may be prevented. Specifically, electrons e- migrate from the iron (Fe) to the copper (Cu), and ionized iron Fe2+ is dissolved in the electrolyte solution. That is, the iron (Fe) is corroded before the copper (Cu), and consequently the corrosion of the copper (Cu) may be delayed due to cathodic protection.

When the cases illustrated in FIGS. 8 and 9 are combined, an intrinsic electric potential of a metal is low in the order of zinc (Zn), iron (Fe), and copper (Cu). Accordingly, when zinc (Zn), iron (Fe), and copper (Cu) are in contact with one another, it may be seen that corrosion of zinc may occur first.

When the above-described corrosive action is used in reverse, corrosion of metal may be prevented and this is referred to as cathodic protection. The heat exchanger 1 according to the embodiment may prevent corrosion of the tube 10 by a method of cathodic protection. Specifically, the tube material may be protected against corrosion by designing an electric potential difference of the tube 10 of the heat exchanger 1 and the core layer 32 of the heat exchanger fin 30 to be in the range of about 50 to 80 mV. However, the above-described numerical range is merely describing the preferred embodiment of the disclosure, and the inventive concept of the disclosure is not limited by the above-described numerical range.

Regarding a design of the electric potential difference, when the electric potential difference of the tube 10 and the core layer 32 is excessively large, the corrosion of the heat exchanger fin 30 is accelerated and it may be difficult to protect the tube 10 against corrosion, and when the electric potential difference of the tube 10 and the core layer 32 is excessively small, the corrosion at the heat exchanger fin 30 and the tube 10 simultaneously progresses and it may be difficult to protect the tube 10 as a result. Thus, when the tube 10 and the core layer 32 are formed as a Galvanic pair, it is necessary to regulate a corrosion potential formed between the tube 10 and the core layer 32 to be within a certain range to protect the tube 10 against corrosion.

By the same token, a corrosion potential formed between the core layer 32 and the filler 36, the filler 36 and a surface of the tube 10, and a surface of the tube 10 and an inside of the tube 10 need to also be properly regulated. According to an example, each of the corrosion potentials formed between the core layer 32 and the filler 36, the filler 36 and the surface of the tube 10, and the surface of the tube 10 and the inside of the tube 10 may be formed in the range of 10 to 30 mV. However, the above-described numerical range is merely describing the preferred embodiment of the disclosure, and the inventive concept of the disclosure is not limited by the above-described numerical range.

In the disclosure, to regulate an electric potential difference formed between the tube 10, the filler 36, and the core layer 32, diverse substances may be added to each aluminum alloy material at various composition ratios. Hereinafter, a composition ratio of the aluminum alloy material will be specifically described.

First, a composition of an aluminum alloy material of the tube 10 for the heat exchanger 1 according to one embodiment will be described.

The tube 10 for the heat exchanger 1 according to one embodiment may be formed of an aluminum alloy material. Generally, an aluminum material has features of lightness and great durability, and particularly an aluminum material mainly used as a material of the tube 10 may be an aluminum-manganese based (A3XXX) material that has features of high strength and corrosion resistance. For instance, an aluminum material such as A3102 may be used, however an example of the aluminum material used as the material of the tube 10 is not limited to the above-described example.

The tube 10 for the heat exchanger 1 may include a rare-earth metal in addition to the above-described aluminum as a base material, and may further include at least one selected from a group that includes silicon (Si), iron (Fe), copper (Cu), manganese (Mn), and zirconium (Zr) in some embodiments.

The quantities of these compositions to be input may be properly regulated within a range of an objective to form a high electric potential of the tube 10. Specifically, the aluminum alloy material may include 0.05 to 0.2 parts by weight of a rare-earth metal with respect to an overall weight of aluminum, and may further include at least one from 0.05 to 0.1 parts by weight of silicon (Si), 0.05 to 0.2 parts by weight of iron (Fe), 0.05 to 0.3 parts by weight of copper (Cu), 0.05 to 0.3 parts by weight of manganese (Mn), and 0.01 to 0.05 parts by weight of zirconium (Zr) with respect to the overall weight of aluminum in some embodiments.

Hereinafter, properties of each component included in the aluminum alloy material that forms the tube 10 and reasons for content control of each of the components will be described in detail.

First, an aluminum alloy tube material includes a rare-earth metal.

Generally, rare-earth metals are chemically very stable, good at withstanding dry air, and have a good thermal conductivity. In the disclosure, susceptibility to intergranular corrosion caused by inputting iron (Fe), manganese (Mn), copper (Cu), and the like may be alleviated by adding a rare-earth metal to the aluminum alloy tube material.

Specifically, a precipitate may be formed at an interface of the tube material when content of iron (Fe), manganese (Mn), copper (Cu), and the like are increased in the aluminum alloy tube material. In other words, intermetallic compounds such as Al2Cu and Al3Fe may be formed at a grain boundary of the tube material, and a pitting corrosion may arise when such intermetallic compounds are formed at the grain boundary.

Pitting is local corrosion and refers to corrosion that creates a hole or a pit on a metal surface. This type of corrosion may be useful in some embodiments, however it is preferable that such a pitting corrosion be minimized in the heat exchanger 1 according to the disclosure herein because of a concern of a durability of the heat exchanger 1 being degraded when the pitting corrosion occurs at the tube material of the heat exchanger 1.

A small pit that is normally covered by a corrosion product is difficult to find, and damage by pitting is difficult to quantify as the number and depth of pits are diverse. In addition, pitting normally requires a latent period, but once started an increasing speed may continuously accelerated. Therefore, to avoid such pitting corrosion, it is preferable to use a new material that has no inclination towards pitting corrosion, or to use a material strong in corrosion resistance.

To this end, the aluminum alloy material according to the disclosure may prevent intermetallic compounds from being formed between an aluminum component and elements of iron (Fe), manganese (Mn), or copper (Cu) by adding a rare-earth metal and regulating the content thereof to avoid the pitting corrosion. A rare-earth metal used for the aluminum composite according to the disclosure herein may include at least one selected from a group that includes yttrium (Y), lanthanum (La), cerium (Ce), neodymium (Nd), scandium (Sc), and ytterbium (Yb). However, this example is of a rare-earth metal available to use and is not limiting.

Among the rare-earth metals, yttrium (Y) will be taken as an example to describe an operation principle. In some embodiments, a small amount of yttrium (Y) may be added to an aluminum alloy material to improve corrosion resistance of the aluminum.

When yttrium (Y) is added to the aluminum alloy material, Al3Y suppresses the creation of intermetallic compounds such as Al2Cu and Al3Fe at grain boundaries of the tube material to suppress the occurrence of pitting corrosion, and peeling of passive films such as Al2O3 from a surface of the tube is prevented, thereby corrosion resistance in a corrosive environment can be improved.

Meanwhile, when the aluminum alloy material contains a lot of rare-earth metal, an intermetallic reaction between the rare-earth metal and other metallic components in the aluminum alloy may occur, and thus mechanical properties of the aluminum may be degraded as a result. Therefore, it is preferable to properly regulate an upper limit range of the rare-earth metal being included in the aluminum alloy material in consideration of the above-described points.

In addition, the aluminum alloy material may include silicon (Si).
Silicon (Si), which is a major impurity element of industrial aluminum and is included in bauxite, which is a raw ore of aluminum in a form of 4 to 10 parts by weight of silica, is added to a casting material to enhance flexibility and castability, and thereby extrusion properties of a casting material can be enhanced and casting defects can be reduced. However, when silicon (Si) content is excessively high, as extrusion properties of the casting material is degraded and casting defects may occur, it is preferable to regulate the upper limit of the silicon (Si) content to be 0.1 parts by weight or less with respect to the overall weight of aluminum.

In addition, the aluminum alloy material may include iron (Fe).

Iron (Fe) is a major impurity element of industrial aluminum and is included in bauxite that is raw ore of aluminum in a form of 10 to 30 parts by weight in a form of iron oxide. Iron (Fe) content added to the aluminum alloy material may be regulated to be 0.1 parts by weight or less with respect to the overall weight of aluminum.

As iron (Fe) forms intermetallic compounds such as Al3Fe and Al7Cu2Fe in the aluminum alloy material, the corrosion resistance of the tube 10 is degraded as the iron content increases, thus an upper limit of the iron (Fe) may be regulated to be 0.1 parts by weight or less.

In addition, the aluminum alloy tube material may include manganese (Mn). Manganese (Mn) may contribute to a fine-grained structure and enhance strength of the tube material by controlling a grain size of a precipitate to be uniformly provided. Therefore, a lower limit of manganese (Mn) content may be regulated to be 0.2 parts by weight or more with respect to the overall weight of aluminum to secure a reliable strength of the alloy tube material.

However, extrusion properties of the aluminum alloy tube material may be degraded when the manganese (Mn) content is excessively high in the aluminum alloy tube material. Accordingly, the manganese (Mn) content may be regulated to be 0.3 parts by weight or less with respect to the overall weight of aluminum to secure an appropriate strength and simultaneously secure extrusion properties of the aluminum alloy tube material.

In addition, the aluminum alloy tube material may include copper (Cu). As described above, copper (Cu) has a higher electric potential than zinc (Zn) or iron (Fe), and accordingly, it may protect the tube material from being corroded before the fin material by designing copper (Cu) content contained in the tube material to be higher than that of the fin material. For a design of an electric potential difference of the tube material and the fin material, a lower limit of the copper content included in the tube material may be regulated to be 0.2 parts by weight or more with respect to the overall weight of aluminum.

Meanwhile, when the copper (Cu) content included in the aluminum alloy material is excessively high, intermetallic compounds such as Al2Cu or Al7Cu2Fe are formed and thus corrosion resistance of the tube material may be degraded. Therefore, an upper limit of the copper (Cu) content may be regulated to be 0.3 parts by weight or less with respect to the overall weight of aluminum.

In addition, the aluminum alloy tube material may include zirconium (Zr). Zirconium (Zr) may refine grain sizes to improve the strength and minutely disperse precipitates that generate electric potential difference in the material to act as a starting point of corrosion, and thereby susceptibility to the intergranular corrosion according to the addition of iron (Fe), manganese (Mn), copper (Cu), and the like may be suppressed.

To this end, zirconium (Zr) content may be regulated to be in the range of 0.01 to 0.05 parts by weight with respect to an overall weight of the aluminum alloy, and corrosion resistance may be degraded when the zirconium content is outside the range. Specifically, when the zirconium (Zr) content exceeds a range value, strength of the alloy material increases due to intrinsic properties of the zirconium, which may cause extrusion properties of the alloy material to degrade, and when the zirconium (Zr) content is less than the range value, properties of the zirconium may be difficult to express. Therefore, it is preferable to properly regulate the zirconium (Zr) content, and hereinafter duplicated descriptions that have been described in the part of rare-earth metal will be omitted.

Next, a composition of the aluminum alloy material of the fin material for the heat exchanger 1 according to one embodiment will be described in more detail.

The fin material of the heat exchanger 1 according to one embodiment may be a fin material of a brazing sheet which may be brazed at a high temperature. The brazing sheet may be formed by attaching the core layer 32 and the clad layer 34, and the clad layer 34 of the brazing sheet is melted to form the filler 36 between the core layer 32 and the tube 10 when the tube 10 and the brazing sheet are coupled by braze-welding. The filler 36 is formed as the clad layer 34 is melted, and the composition thereof may be the same as or similar to the composition of the clad layer 34. For this reason, hereinafter, the fin material may be a concept that includes a core material that forms the core layer 32 of the heat exchanger fin 30 and a clad material that forms the clad layer 34 of the heat exchanger fin 30, and in some embodiments, may be a concept that includes the core material that forms the core layer 32 of the heat exchanger fin 30 and a filler material that forms the filler 36.

Each of the core layer 32 and the clad layer 34 of the brazing sheet may be formed of an aluminum material. Aluminum materials used for the core layer 32 and the clad layer 34 may be an aluminum-manganese based (A3XXX) material and an aluminum-silicon based (A4XXX) material, respectively. According to an example, an aluminum material such as A3003 may be used for the core layer 32, and an aluminum material such as A4343 may be used for the clad layer. However, an example of the aluminum materials respectively used for the core layer 32 and the clad layer 34 may not be limited to the above-described example.

The fin material for the heat exchanger 1 may be formed of an aluminum alloy material that includes silicon (Si), copper (Cu), and zinc (Zn) and an aluminum material as the base. Here, an amount of the compositions added to the aluminum alloy material may be regulated to a certain range of concentration within the range of the objective to regulate the electric potential of the fin material. More specifically, in order to form a higher electric potential at the filler 36 than at the core layer 32, each content of silicon (Si), copper (Cu), and zinc (Zn) to be included in the aluminum alloy material for forming the filler 36 and the core layer 32 may be regulated.

According to an example, the core layer 32 may be formed of an aluminum alloy material that includes 0.1 to 0.6 parts by weight of silicon (Si), 0.05 to 0.2 parts by weight of copper (Cu), and 2.3 to 2.7 parts by weight of zinc (Zn) with respect to the overall weight of aluminum. In addition, the filler 36 may be formed of an aluminum alloy material that includes 6.8 to 8.2 parts by weight of silicon (Si), 0.1 to 0.25 parts by weight of copper (Cu), and 0.1 to 0.2 parts by weight of zinc (Zn) with respect to the overall weight of aluminum.

Meanwhile, in some embodiments, the aluminum alloy material may further include at least one selected from a group that includes iron (Fe), manganese (Mn), chrome (Cr), zirconium (Zr), and titanium (Ti) aside from compositions of silicon (Si), copper (Cu), and zinc (Zn).

According to an example, the core layer 32 may be formed of an aluminum alloy material that further includes at least one from 0.1 to 0.3 parts by weight of iron (Fe), 1.0 to 1.5 parts by weight of manganese (Mn), 0.01 to 0.1 parts by weight of chrome (Cr), 0.01 to 0.1 parts by weight of zirconium (Zr), and 0.01 to 0.1 parts by weight of titanium (Ti) with respect to the overall weight of aluminum. In addition, the filler 36 may be formed of an aluminum alloy material that further includes at least one from 0.6 to 0.8 parts by weight of iron (Fe), 0.05 to 0.1 parts by weight of manganese (Mn), 0.01 to 0.1 parts by weight of chrome (Cr), 0.01 to 0.1 parts by weight of zirconium (Zr), and 0.01 to 0.1 parts by weight of titanium (Ti) with respect to the overall weight of aluminum.

Hereinafter, properties of each composition included in the fin material and a reason for controlling each composition will be described in detail. First, the aluminum alloy materials that form the core layer 32 and the filler 36 include copper (Cu).

As described above, copper (Cu) has a higher electric potential than zinc (Zn). Thus, the electric potential of the aluminum alloy material may be regulated by regulating copper (Cu) content compared to zinc (Zn) content. The heat exchanger 1 according to the disclosure herein is directed to protect the tube 10 by regulating the electric potential to decrease in the order of the tube 10, the filler 36, and the core layer 32.

To this end, the aluminum alloy material that forms the tube 10 may include the highest content of copper (Cu) component. In addition, the aluminum alloy material that forms the filler 36 may include less content of copper (Cu) component than the aluminum alloy material which forms the tube 10, and the aluminum alloy material that forms the core material may include less content of copper (Cu) component than with the aluminum alloy material that forms the filler 36.

Specifically, a copper (Cu) component included in the aluminum alloy material that forms the tube 10 may be regulated to be in the range of 0.2 to 0.3 parts by weight with respect to the overall weight of aluminum, a copper (Cu) component included in the aluminum alloy material that forms the filler 36 may be regulated to be in the range of 0.1 to 0.25 parts by weight with respect to the overall weight of aluminum, and a copper (Cu) component included in the aluminum alloy material that forms the core layer 32 of the heat exchanger fin 30 may be regulated to be in the range of 0.05 to 0.2 parts by weight with respect to the overall weight of aluminum. That is, the copper content of the aluminum alloy material that forms the tube 10 may be the highest, and the copper content of the aluminum alloy material that forms the core layer 32 may be the lowest.

Meanwhile, when the copper (Cu) content included in the aluminum alloy material is excessively high, a reversal phenomenon may occur between the electric potentials of the core layer 32 and the filler 36, which may lead to a degradation of corrosion resistance at the core layer 32 or the filler 36. It is preferable to regulate an upper limit of the copper (Cu) content included in the alloy material as described above in order to regulate the electric potentials of the core layer 32 and the filler 36 as intended and simultaneously prevent precipitates from being formed.

In addition, the aluminum alloy materials include zinc (Zn).

As described above, zinc (Zn) has a lower electric potential than copper (Cu). Therefore, the electric potential of the aluminum alloy material may be regulated by regulating zinc (Zn) content compared to copper (Cu) content. The principle of regulating the electric potential by regulating the zinc (Zn) content may be similar to regulating the copper (Cu) content.

The aluminum alloy material that forms the tube 10 may include the least content of a zinc (Zn) component. In addition, the aluminum alloy material that forms the filler 36 may include more content of the zinc (Zn) component than the aluminum alloy material that forms the tube 10, and the aluminum alloy material that forms the core layer 32 may include more content of the zinc (Zn) component than the aluminum alloy material that forms the filler 36.

Specifically, the zinc (Zn) component included in the aluminum alloy material that forms the tube 10 may be regulated to be within the range 0.05 parts by weight or less with respect to the overall weight of aluminum, the zinc (Zn) component included in the aluminum alloy material that forms the filler 36 may be regulated to be within the range of 0.1 to 0.2 parts by weight with respect to the overall weight of aluminum, and the zinc (Zn) component included in the aluminum alloy material that forms the core layer 32 of the heat exchanger fin 30 may be regulated to be within the range of 2.3 to 2.7 parts by weight with respect to the overall weight of aluminum.

Meanwhile, when the zinc (Zn) content included in the aluminum alloy material is excessively high, the strength of the aluminum alloy fin material may be degraded, and thus it is preferable to add an appropriate amount of zinc (Zn) to the aluminum alloy material.

In addition, the aluminum alloy materials include silicon (Si).
Generally, silicon (Si) has properties of lowering a melting point of an alloy material. As the clad material of the fin material is melted to form the filler 36 in the heat exchanger 1 according to the embodiment, a large amount of silicon (Si) contained in the clad material may facilitate a brazing process. The filler 36 formed by the clad material being melted comes to contain a large amount of silicon (Si) like the clad material.

In addition, the aluminum alloy materials may further include iron (Fe) in some embodiments.

As described above, the strength of the aluminum alloy material may be increased by regulating iron (Fe) content included in the aluminum alloy material, but it is preferable to properly regulate the iron (Fe) content because corrosion resistance of the tube 10 may be degraded when the iron (Fe) content in the aluminum alloy material is excessively high. Hereinafter, duplicated descriptions that have been described regarding the reason for inputting an iron (Fe) component and the like will be omitted.

In addition, the aluminum alloy materials may further include chrome (Cr) or zirconium (Zr) in some embodiments.

Chrome (Cr) and zirconium (Zr) may prevent intermetallic compounds such as Al2Cu and Al3Fe from being formed at the grain boundaries of the filler 36 material and the core material. In other words, Chrome (Cr) and zirconium (Zr) may perform a similar function as the rare-earth material as described above.

However, when a large amount of chrome (Cr) and zirconium (Zr) are input, a certain level of electric potential difference may be formed from a relationship with the aluminum (Al) component. Besides, the strength of the alloy material increases due to intrinsic properties of chrome (Cr) and zirconium (Zr) and extrusion properties of the aluminum alloy material may be degraded as the result. Therefore, it is preferable to properly regulate the content of chrome (Cr) and zirconium (Zr) considering the points described as above.

In addition, the aluminum alloy materials may further include titanium (Ti) depending on embodiment.

Titanium (Ti) refines grains formed in the aluminum alloy material. When the grains formed in an aluminum alloy material are refined, mechanical properties such as strength, tensile force, etc. of the material may be strengthened, and chemical properties such as corrosion resistance may also be strengthened. Accordingly, it is preferable to properly regulate titanium (Ti) content included in the aluminum alloy material in consideration the points described as above.

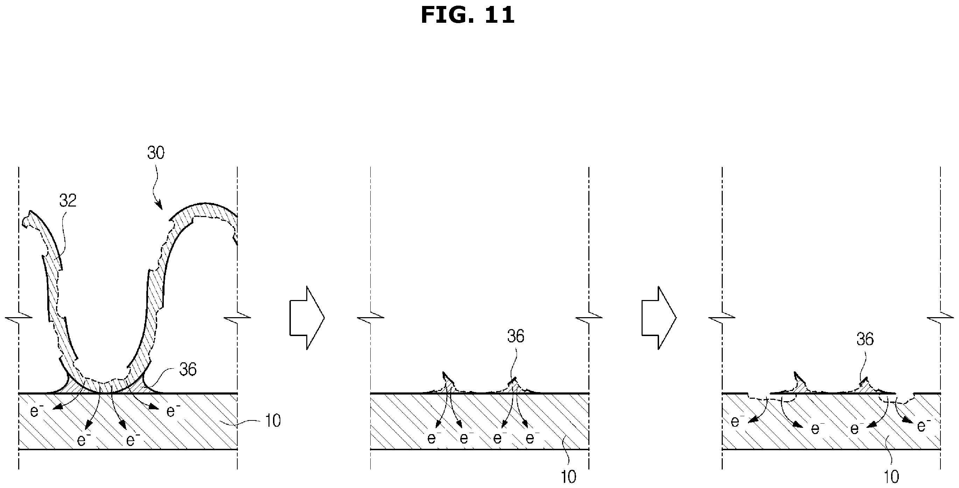

Hereinafter, FIG. 10 is a view illustrating a design example of an electric potential difference of the heat exchanger 1 according to one embodiment, and FIG. 11 is a view illustrating a corrosion process of the heat exchanger 1 according to one embodiment.

Referring to FIG. 10, the heat exchanger 1 according to one embodiment may be designed so that an electric potential VC of the core layer 32 of the heat exchanger fin 30, an electric potential VF of the filler 36, an electric potential VS of a surface of the tube 10, and an electric potential VT of the tube 10 have a relationship of VT > VS > VF > VC. Here, a corrosion potential formed by a Galvanic pairing of the core layer 32 and the tube 10, in other words, the corrosion potential of VC and VT, may be within the range of 50 to 80 mV. Meanwhile, in some embodiments, electric potential differences between VT and VS, VS and VF, and VF and VC may be within the range of 10 to 30 mV.

Referring to FIG. 11, by the electric potential differences formed as above, the core layer 32 of the heat exchanger fin 30 may be the first to be corroded and then the corrosion may progress to the filler 36 and the surface of the tube. When corrosion of the core layer 32 progresses, Galvanic pairs between the core layer 32 and the filler 36 or the core layer 32 and the tube 10 may be formed. In this case, electrons e- may migrate in a direction from the core layer 32 to the filler 36 or from the core layer 32 to the tube 10, and consequently a sacrificial corrosion of the core layer 32 may progress.

When the sacrificial corrosion of the core layer 32 progresses to some extent, corrosion at the filler 36 and the surface of the tube may progress. When corrosion at the filler 36 and the surface of the tube progresses, Galvanic pairs may be formed between the core layer 32 and the filler 36 or the core layer 32 and the surface of the tube. In this case, electrons e- may migrate in a direction from the filler 36 to the tube 10 or from the surface of the tube to an inside of the tube 10. Thus, the tube material may be protected as the inside of the tube is lastly corroded after corrosion has sequentially progressed from the core layer 32, the filler 36, and to the surface of the tube.

Composition ratios of the components included in the tube material and the fin material of the heat exchanger 1 are summarized in the Table 1 below.

**[Table 1]**

| Materials | | Silicon (Si) | Iron (Fe) | Copper (Cu) | Mangan ese (Mn) | Zinc (Zn) | Zirconi um (Zr) | Yttrium (Y) |
|---|---|---|---|---|---|---|---|---|
| Fin Material | Core Material | 0.1-0.6 | 0.1-0.3 | 0.05-0.2 | 1.0-1.5 | 2.3-2.7 | 0.01-0.1 | - |
| | Filler Material (Clad Material) | 6.8-8.2 | 0.6-0.8 | 0.1-0.25 | 0.05-0.1 | 0.1-0.2 | 0.01-0.1 | - |
| Tube Material | | 0.05-0.1 | 0.05-0.2 | 0.05-0.3 | 0.05-0.3 | 0.05 or less | 0.01-0.05 | 0.05-0.2 |

Referring to Table 1, the copper content is shown as increasing and the zinc content is shown as decreasing in the order of the core material, the filler material, and the tube material. In other words, the electric potentials are designed to increase as they go from the core material to the tube material.

In addition, it can be seen that yttrium may be added to the tube material. In other words, yttrium, which is one rare metal, may be added to the tube material to prevent pitting corrosion that may occur due to the addition of a large amount of copper to the tube material. In some embodiments, zirconium (Zr) may be added to the tube material as a matter of course to prevent pitting corrosion.

The heat exchanger 1 according to one embodiment has been described.

The design method of an electric potential difference of a heat exchanger according to the disclosure is not limited to the type of the heat exchanger 1 described as above. For example, the design method of an electric potential difference according to the disclosure may also be applied to a folded tube heat exchanger that has a form of an outer tube and an inner fin.

As is apparent from the above description, the heat exchanger in accordance with one aspect of the present disclosure can improve corrosion resistance of the tube material of the heat exchanger by designing electric potential differences to decrease in the order of the tube, the filler, and the core layer of the heat exchanger fin.

More specifically, corrosion resistance of the tube material in the heat exchanger can be improved only with a design of the alloy material used for the tube material.

In addition, a coating cost conducted after a brazing of the fin and the tube can be saved.

Although the present invention has been described with exemplary embodiments, various changes and modifications may be suggested to one skilled in the art. It is intended that the present invention encompasses such changes and modifications as fall within the scope of the appended claims.

## Claims

1. A heat exchanger (1) comprising:
a tube (10) through which a refrigerant flows;
a heat exchanger fin (30) coupled to a surface of the tube; and
a filler (36) that couples the tube and the heat exchanger fin,
**characterized in that** the tube is formed of an aluminium alloy material including a rare-earth metal, and the heat exchanger fin and the filler are formed of an aluminium alloy material including silicon (Si), copper (Cu) and zinc (Zn),
wherein electric potentials of the tube, the filler, and the heat exchanger fin are formed to sequentially decrease.

2. The heat exchanger of claim 1, wherein the aluminium alloy material of the tube further includes at least one selected from a group that includes silicon (Si), iron (Fe), copper (Cu), manganese (Mn) and zirconium (Zr).

3. The heat exchanger of claim 2, wherein the aluminium alloy material of the tube includes 0.05 to 0.2 parts by weight of the rare-earth metal with respect to an overall weight of aluminium, and further includes at least one from 0.05 to 0.1 parts by weight of silicon (Si), 0.05 to 0.2 parts by weight of iron (Fe), 0.05 to 0.3 parts by weight of copper (Cu), 0.05 to 0.3 parts by weight of manganese (Mn), and 0.01 to 0.05 parts by weight of zirconium with respect to the overall weight of aluminium.

4. The heat exchanger of claim 1, 2 or 3, wherein the rare-earth metal includes at least one selected from a rare-earth metal group that includes yttrium (Y), lanthanum (La), cerium (Ce), neodymium (Nd), scandium (Sc) and ytterbium (Yb).

5. The heat exchanger of any one of the preceding claims, wherein the heat exchanger fin is braze-welded to the tube.

6. The heat exchanger of any one of the preceding claims, wherein:
the heat exchanger fin includes a core layer (32) and a clad layer (34) formed on at least one surface of the core layer; and
the clad layer is melted to form the filler when braze-welding the heat exchanger fin and the tube.

7. The heat exchanger of claim 6, wherein the filler has a higher electric potential than the core layer of the heat exchanger fin.

8. The heat exchanger of claim 6 or 7, wherein the tube and the core layer of the heat exchanger fin are formed to have a corrosion potential within a range of 50 to 80 mV.

9. The heat exchanger of any one of the preceding claims, wherein a core layer (32) of the heat exchanger fin is formed of an aluminium alloy material that includes 0.1 to 0.6 parts by weight of silicon (Si), 0.05 to 0.2 parts by weight of copper (Cu), and 2.3 to 2.7 parts by weight of zinc (Zn) with respect to an overall weight of aluminium.

10. The heat exchanger of any one of the preceding claims, wherein the filler is formed of an aluminium alloy material that includes 6.8 to 8.2 parts by weight of silicon (Si), 0.1 to 0.25 parts by weight of copper (Cu), and 0.1 to 0.2 parts by weight of zinc (Zn) with respect to an overall weight of aluminium.

11. The heat exchanger of any one of the preceding claims, wherein at least one of the heat exchanger fin and the filler is formed of an aluminium alloy material that further includes at least one selected from a group that includes iron (Fe), manganese (Mn), chrome (Cr), zirconium (Zr) and titanium (Ti).

12. The heat exchanger of claim 11, wherein a core layer (32) of the heat exchanger fin is formed of an aluminium alloy material that further includes at least one selected from a group that includes 0.1 to 0.3 parts by weight of iron (Fe), 1.0 to 1.5 parts by weight of manganese (Mn), 0.01 to 0.1 parts by weight of chrome (Cr), 0.01 to 0.1 parts by weight of zirconium (Zr), and 0.01 to 0.1 parts by weight of titanium (Ti) with respect to an overall weight of aluminium, and
wherein the filler is formed of an aluminium alloy material that further includes at least one selected from a group that includes 0.6 to 0.8 parts by weight of iron (Fe), 0.05 to 0.1 parts by weight of manganese (Mn), 0.01 to 0.1 parts by weight of chrome (Cr), 0.01 to 0.1 parts by weight of zirconium (Zr), and 0.01 to 0.1 parts by weight of titanium (Ti) with respect to an overall weight of aluminium.

13. An air conditioner (200) including a heat exchanger (1) according to any one of the preceding claims.

## Patentansprüche

1. Wärmetauscher (1), der Folgendes umfasst:
eine Röhre (10), durch die ein Kältemittel fließt;
eine Wärmetauscherlamelle (30), die an eine Oberfläche der Röhre gekoppelt ist; und
einen Füllstoff (36), der die Röhre und die Wärmetauscherlamelle koppelt,
**dadurch gekennzeichnet, dass**
die Röhre aus einem ein Seltenerdmetall umfassendes Aluminiumlegierungsmaterial gebildet ist und die Wärmetauscherlamelle und der Füllstoff aus einem Silizium (Si), Kupfer (Cu) und Zink (Zn) umfassenden Aluminiumlegierungsmaterial gebildet sind,
wobei die elektrischen Potentiale der Röhre, des Füllstoffs und der Wärmetauscherlamelle gebildet sind, um der Reihe nach abzunehmen.

2. Wärmetauscher nach Anspruch 1, wobei das Aluminiumlegierungsmaterial der Röhre weiter mindestens ein Element umfasst, das aus einer Silizium (Si), Eisen (Fe), Kupfer (Cu), Mangan (Mn) und Zirkon (Zr) umfassenden Gruppe ausgewählt ist.

3. Wärmetauscher nach Anspruch 2, wobei das Aluminiumlegierungsmaterial der Röhre 0,05 bis 0,2 Gewichtsanteile des Seltenerdmetalls bezogen auf ein Gesamtgewicht von Aluminium umfasst und weiter mindestens eines von 0,05 bis 0,1 Gewichtsanteilen Silizium (Si), 0,05 bis 0,2 Gewichtsanteilen Eisen (Fe), 0,05 bis 0,3 Gewichtsanteilen Kupfer (Cu), 0,05 bis 0,3 Gewichtsanteilen Mangan (Mn) und 0,01 bis 0,05 Gewichtsanteilen Zirkon bezogen auf das Gesamtgewicht von Aluminium umfasst.

4. Wärmetauscher nach Anspruch 1, 2 oder 3, wobei das Seltenerdmetall mindestens ein Element umfasst, das aus einer Yttrium (Y), Lanthan (La), Cer (Ce), Neodym (Nd), Scandium (Sc) und Ytterbium (Yb) umfassenden Seltenerdmetallgruppe ausgewählt ist.

5. Wärmetauscher nach einem der vorangehenden Ansprüche, wobei die Wärmetauscherlamelle an die Röhre hartgelötet ist.

6. Wärmetauscher nach einem der vorangehenden Ansprüche, wobei:
die Wärmetauscherlamelle eine Kernschicht (32) und eine auf mindestens einer Oberfläche der Kernschicht gebildete Plattierungsschicht (34) umfasst; und
die Plattierungsschicht geschmolzen wird, um den Füllstoff zu bilden, wenn die Wärmetauscherlamelle und die Röhre hartgelötet werden.

7. Wärmetauscher nach Anspruch 6, wobei der Füllstoff ein höheres elektrisches Potential aufweist als die Kernschicht der Wärmetauscherlamelle.

8. Wärmetauscher nach Anspruch 6 oder 7, wobei die Röhre und die Kernschicht der Wärmetauscherlamelle gebildet sind, um ein Korrosionspotential in einem Bereich von 50 bis 80 mV aufzuweisen.

9. Wärmetauscher nach einem der vorangehenden Ansprüche, wobei eine Kernschicht (32) der Wärmetauscherlamelle aus einem Aluminiumlegierungsmaterial gebildet ist, das 0,1 bis 0,6 Gewichtsanteile Silizium (Si), 0,05 bis 0,2 Gewichtsanteile Kupfer (Cu) und 2,3 bis 2,7 Gewichtsanteile Zink (Zn) bezogen auf ein Gesamtgewicht von Aluminium umfasst.

10. Wärmetauscher nach einem der vorangehenden Ansprüche, wobei der Füllstoff aus einem Aluminiumlegierungsmaterial gebildet ist, das 6,8 bis 8,2 Gewichtsanteile Silizium (Si), 0,1 bis 0,25 Gewichtsanteile Kupfer (Cu) und 0,1 bis 0,2 Gewichtsanteile Zink (Zn) bezogen auf ein Gesamtgewicht von Aluminium umfasst.

11. Wärmetauscher nach einem der vorangehenden Ansprüche, wobei die Wärmetauscherlamelle und/oder der Füllstoff aus einem Aluminiumlegierungsmaterial gebildet ist, das weiter mindestens ein Element umfasst, das aus einer Eisen (Fe), Mangan (Mn), Chrom (Cr), Zirkon (Zr) und Titan (Ti) umfassenden Gruppe ausgewählt ist.

12. Wärmetauscher nach Anspruch 11, wobei eine Kernschicht (32) der Wärmetauscherlamelle aus einem Aluminiumlegierungsmaterial gebildet ist, das weiter mindestens ein Element umfasst, das aus einer 0,1 bis 0,3 Gewichtsanteile Eisen (Fe), 1,0 bis 1,5 Gewichtsanteile Mangan (Mn), 0,01 bis 0,1 Gewichtsanteile Chrom (Cr), 0,01 bis 0,1 Gewichtsanteile Zirkon (Zr) und 0,01 bis 0,1 Gewichtsanteile Titan (Ti) bezogen auf ein Gesamtgewicht von Aluminium umfassenden Gruppe ausgewählt ist, und
wobei der Füllstoff aus einem Aluminiumlegierungsmaterial gebildet ist, das weiter mindestens eine Element umfasst, das aus einer 0,6 bis 0,8 Gewichtanteile Eisen (Fe), 0,05 bis 0,1 Gewichtsanteile Mangan (Mn), 0,01 bis 0,1 Gewichtsanteile Chrom (Cr), 0,01 bis 0,1 Gewichtsanteile Zirkon (Zr) und 0,01 bis 0,1 Gewichtsanteile Titan (Ti) in Bezug auf ein Gesamtgewicht von Aluminium umfassenden Gruppe ausgewählt ist.

13. Klimagerät (200), umfassend einen Wärmetauscher (1) nach einem der vorangehenden Ansprüche.

## Revendications

1. Échangeur de chaleur (1), comprenant :
un tube (10) dans lequel circule un fluide frigorigène ;
une ailette d'échangeur de chaleur (30) accouplée à une surface du tube ; et
une charge (36) qui accouple le tube et l'ailette d'échangeur de chaleur,
l'échangeur de chaleur étant **caractérisé en ce que** :
le tube est constitué d'un matériau d'alliage d'aluminium comprenant un métal de terres rares, et l'ailette d'échangeur de chaleur et la charge sont constituées d'un matériau d'alliage d'aluminium comprenant du silicium (Si), du cuivre (Cu) et du zinc (Zn),
les potentiels électriques du tube, de la charge et de l'ailette d'échangeur de chaleur étant constitués pour décroître successivement.

2. Échangeur de chaleur selon la revendication 1, dans lequel le matériau d'alliage d'aluminium du tube comprend en outre au moins un élément sélectionné dans un groupe constitué de silicium (Si), de fer (Fe), de cuivre (Cu), de manganèse (Mn) et de zirconium (Zr).

3. Échangeur de chaleur selon la revendication 2, dans lequel le matériau d'alliage d'aluminium du tube comprend de 0,05 à 0,2 partie en poids du métal de terres rares par rapport à un poids total d'aluminium, et comprend en outre au moins de 0,05 à 0,1 partie en poids de silicium (Si), de 0,05 à 0,2 partie en poids de fer (Fe), de 0,05 à 0,3 partie en poids de cuivre (Cu), de 0,05 à 0,3 partie en poids de manganèse (Mn) et de 0,01 à 0,05 partie en poids de zirconium par rapport au poids total d'aluminium.

4. Échangeur de chaleur selon la revendication 1, 2 ou 3, dans lequel le métal de terres rares comprend au moins un élément sélectionné dans un groupe de métaux de terres rares constitué de d'yttrium (Y), de lanthane (La), de cérium (Ce), de néodyme (Nd), de scandium (Sc) et d'ytterbium (Yb).

5. Échangeur de chaleur selon l'une quelconque des revendications précédentes, dans lequel l'ailette d'échangeur de chaleur est soudobrasée au tube.

6. Échangeur de chaleur selon l'une quelconque des revendications précédentes, dans lequel :
l'ailette d'échangeur de chaleur comprend une couche intérieure (32) et une couche de revêtement (34) formée sur au moins une surface de la couche intérieure ; et
la couche de revêtement est fondue pour former la charge lors du soudobrasage de l'ailette d'échangeur de chaleur et du tube.

7. Échangeur de chaleur selon la revendication 6, dans lequel la charge à un potentiel électrique supérieur à celui de la couche intérieure de l'ailette d'échangeur de chaleur.

8. Échangeur de chaleur selon la revendication 6 ou 7, dans lequel le tube et la couche intérieure de l'ailette d'échangeur de chaleur sont formés de manière à avoir un potentiel de corrosion de l'ordre de 50 à 80 mV.

9. Échangeur de chaleur selon l'une quelconque des revendications précédentes, dans lequel une couche intérieure (32) de l'ailette d'échangeur de chaleur est constituée d'un matériau d'alliage d'aluminium comprenant de 0,1 à 0,6 partie en poids de silicium (Si), de 0,05 à 0,2 partie en poids de cuivre (Cu) et de 2,3 à 2,7 parties en poids de zinc (Zn) par rapport à un poids total d'aluminium.

10. Échangeur de chaleur selon l'une quelconque des revendications précédentes, dans lequel la charge est constituée d'un matériau d'alliage d'aluminium comprenant de 6,8 à 8,2 parties en poids de silicium (Si), de 0,1 à 0,25 partie en poids de cuivre (Cu) et de 0,1 à 0,2 partie en poids de zinc (Zn) par rapport à un poids total d'aluminium.

11. Échangeur de chaleur selon l'une quelconque des revendications précédentes, dans lequel l'ailette d'échangeur de chaleur et/ou la charge sont constituées d'un matériau d'alliage d'aluminium qui comprend en outre au moins un élément sélectionné dans un groupe constitué de fer (Fe), de manganèse (Mn), de chrome (Cr), de zirconium (Zr) et de titane (Ti) .

12. Échangeur de chaleur selon la revendication 11, dans lequel une couche intérieure (32) de l'ailette d'échangeur de chaleur est constituée d'un matériau d'alliage d'aluminium qui comprend en outre au moins un élément sélectionné dans un groupe constitué de 0,1 à 0,3 partie en poids de fer (Fe), de 1,0 à 1,5 parties en poids de manganèse (Mn), de 0,01 à 0,1 partie en poids de chrome (Cr), de 0,01 à 0,1 partie en poids de zirconium (Zr) et de 0,01 à 0,1 partie en poids de titane (Ti) par rapport à un poids total d'aluminium, et
dans lequel la charge est constituée d'un matériau d'alliage d'aluminium qui comprend en outre au moins un élément sélectionné dans un groupe constitué de 0,6 à 0,8 partie en poids de fer (Fe), de 0,05 à 0,1 partie en poids de manganèse (Mn), de 0,01 à 0,1 partie en poids de chrome (Cr), de 0,01 à 0,1 partie en poids de zirconium (Zr) et de 0,01 à 0,1 partie en poids de titane (Ti) par rapport à un poids total d'aluminium.

13. Climatiseur (200) comprenant un échangeur de chaleur (1) selon l'une quelconque des revendications précédentes.
